# EUROPEAN PATENT SPECIFICATION

(11) **EP 3 676 198 B1**
(45) Date of publication and mention of the grant of the patent: **25.09.2024**
(21) Application number: 18789256.7
(22) Date of filing: 28.08.2018
(51) Int. Cl.: B65G 1/137, B65G 1/04

(54) **METHOD, TRANSPORT DEVICE AND SYSTEM FOR MATERIAL HANDLING**
VERFAHREN, TRANSPORTVORRICHTUNG UND SYSTEM ZUR HANDHABUNG VON MATERIAL
PROCÉDÉ, APPAREIL DE TRANSPORT ET SYSTÈME POUR LA MANUTENTION DE MATÉRIEL

(30) Priority: 29.08.2017 SE 1751032
(43) Date of publication of application: 08.07.2020
(73) Proprietor: Väderstad Holding AB, 590 21 Väderstad (SE)
(72) Inventor: LINDBERG, Clas, 596 92 Skänninge (SE); STARK, Andreas, 590 21 Väderstad (SE)
(74) Representative: AWA Sweden AB
(86) International application number: PCT/SE2018/050860
(87) International publication number: WO 2019/045621

(56) References cited:
- EP-A1- 0 235 488
- EP-A1- 3 263 491
- WO-A1-2011/071443
- US-A1- 2015 098 775
- US-A1- 2017 107 055

## Description

### Technical Field

This document relates to a method and a system for material handling, and especially material handling in a manufacturing plant.

The document also discloses a transport device which is suitable for use in the method.

The method and system can be used in particular when handling disc-shaped materials, such as metal sheet which is used when manufacturing agricultural implements, and which can be fully or partly machined, e.g. cut, bent, lacquered, etc.

### Background

When supplying material for manufacturing, it is desirable to keep the inventory value as low as possible. Cut parts and components have a higher inventory value than the equivalent quantity of raw material. In addition, raw material is more flexible since it only becomes specific to a certain product during cutting. Furthermore, raw material can be disposed of at a higher value than components, which are normally disposed of as scrap.

It is also desirable that the components held in stock have already been ordered, i.e. that cutting of components for a product should only happen once the product is ordered.

Furthermore, it is desirable to collect components into material sets to be forwarded to the working area where assembly will take place. Preferably, each material set contains all or a considerable part of the components to be assembled to a product or a part of a product at a manufacturing stage, e.g. by welding and/or by using mechanical joints such as riveting, bolting or similar.

It is also desirable to facilitate the highest possible utilization ratio for the raw material. This can be provided by planning the cutting of each raw material piece (a bar, a pipe, a beam, a sheet etc.) in relation to existing orders. Thus, when cutting a piece of raw material, components for a plurality of products can be provided in the same operation. When this occurs, it is desirable to be able to distribute the cut components directly to the material sets for each respective product. Therefore, it is desirable to be able to distribute components from a cutting station to a large number of material sets.

It is known to utilize a robot at a machining station, such as a saw, lathe or milling cutter, to distribute machined components one at a time directly to a plurality of material set carriers.

WO2011071443A1 discloses a method and system for material handling, which enables fast distribution of machined components to material set carriers.

US2015098775A1, US20170107055A1 and EP0235488A1 disclose related arrangements.

However, there is a need to increase the capacity further to distribute machined components to material sets.

### Summary

One object of the present invention is thus to provide a method and a system for faster and more precise distribution of components from a feed station to a large number of material sets.

The invention is defined by the attached independent patent claims. Embodiments are set forth in the dependent patent claims, in the description that follows and in the drawings.

According to a first aspect, a method for distribution of components to material sets according to claim 1 is provided. The method comprises providing, at a feed station at least two components; arranging, at the feed station, said at least two components on a common intermediate carrier; and transferring said components to at least one material set carrier (6) located at a distance from the feed station, in such a way that each of said material set carriers contains a plurality of components that are intended to be joined together to form part of a predetermined product. The transport device is configured to move along the storage arrangement, collect the intermediate carrier; collect at least one material set carrier from a first storage area in the storage arrangement, and while moving along the storage arrangement, transfer at least one of the components from the intermediate carrier to the material set carrier (6). The method involves the transfer of the components to the material set carrier being carried out using a numerically controlled picking device, while the intermediate carrier and the material set carrier are being moved using a common transport device, between the first and second storage areas in a first or second storage arrangement for storing a plurality of material set carriers.

"Component" means a part at least partly machined, such as a part which has been sawn, drilled, punched, turned, forged, milled and/or lasercut. The component can be formed from a raw material, such as a strip, a sheet, a bar or a beam. Alternatively, the component can be forged, cast or moulded. The component can also be formed, e.g. through bending or forging. Furthermore, the component can be, but does not have to be, treated through e.g. cleaning, hardening or some other surface treatment.

"Material set carrier" means a carrier or a cohesive unit that can receive a plurality of components, which together form a material set intended to be assembled to form a product or a part of a product. One example of a material set carrier can be a pallet, which can be provided with a bottom and/or a pallet collar in order to prevent components from falling off the material set carrier. The material set carrier can also have another form, which can be specifically designed to receive current types of components. For example, the material set carrier can have predetermined places for each individual component. Such places can be marked by an indicator so that it is easy to mechanically determine if a component is missing or not. Alternatively, such places can be adapted in shape to receive a certain component and prevent the component from moving when the material set carrier is being moved. Other examples of material set carriers can be boxes, trays, cradles or gantries to hold a plurality of components.

"Predetermined product" partly means products that are known to the person carrying out the method. However, the predetermined product does not have to be known to the person carrying out the method to a greater extent than what is necessary to carry out the method.

"At a distance from" means that the material set carrier is located such a long way from the feed station that the equipment used to arrange the components on the intermediate carrier cannot be used to arrange the components directly in the material set carrier instead.

"Intermediate carrier" means a temporary carrier that can carry a plurality of components. The intermediate carrier can carry components arranged in a predetermined pattern, which can facilitate picking, or at random, which requires adaptation of the control software of the picking device. For example, the intermediate carrier can have the form of a pallet or of a larger tray or open box. Examples of intermediate carriers can be pallets, boxes, trays, cradles or gantries to hold a plurality of components.

A transport device can comprise a crane, a shuttle, a conveyor belt, an autonomous truck or similar, which has a carrier with a picking device that can work while the transport device is moving.

The first and second storage areas can be the same storage area, or different storage areas. Furthermore, the first and second storage areas can be situated in the same storage arrangement, or in different storage arrangements.

There can also be one storage arrangement or several storage arrangements.

The storage arrangements can be located on opposite sides of a work area for the transport device. The storage arrangements are typically located on the same premises, and preferably in the same building.

By way of transferring components from the intermediate carrier to the material set carrier, while this is moving together with the material set carrier, it is possible to reduce, or completely eliminate, the time that the intermediate carrier otherwise would have been stationary at the material set carrier in order to carry out the transfer. Therefore, the capacity, i.e. the number of distributed components at a given time, can be increased.

The method can further comprise collecting the material set carrier from the first storage area, and when the transfer of components to the material set carrier is completed, leaving the material set carrier in the second storage area.

The method can further comprise collecting a second material set carrier from a third storage area in the storage arrangement or in the second storage arrangement, transferring at least one component from the intermediate carrier to the second material set carrier while the intermediate carrier and the material set carriers are being moved using the transport device, and when the transfer of the components to the second material set carrier is completed, leaving the second material set carrier in a fourth storage area in the storage arrangement or in the second storage arrangement.

In the method, said components can be arranged, at the feed station, on said intermediate carrier using a robot.

In the method, said component can be positioned at a predetermined position in the material set carrier.

In the method, said at least two components can be intended to form part of different products.

Alternatively, said at least two components can be intended to form part of the same product.

In the method, said at least two components can substantially differ with respect to the material, the shape, the dimension and/or the layout of the cut-out. Typical materials can be steel, stainless steel, aluminium, etc.

Here, "substantially" means that the difference is intentional, and not just as a result of what can be considered to be manufacturing tolerances. For example, two components can be of different material but otherwise identical; they can have different shapes but be of the same material; they can have different dimensions but be of the same material and have the same shape; or they can have substantially the same outer shape but be cut in different ways.

The method can further comprise at least one machining step being carried out at the feed station on at least one of said components.

The machining can comprise forming from a raw material, e.g. by cutting, punching, bending or similar for forming a component or a component blank. The machining can also comprise one or more of cutting (punching, laser-cutting, sawing), post-treatment of cut surfaces, bending, welding and pressing.

The method can further comprise, when one of the components is arranged on the intermediate carrier, forming a first virtual representation of the position of the component on the intermediate carrier; when the component is transferred to the material set carrier, identifying the component using said first virtual representation so that the picking device can grip and pick up the component; and when the components are arranged on the material set carrier, forming a second virtual representation of each position of the components on the material set carrier.

A virtual representation can, as a non-limiting example, be carried out in the form of a set of entries, which each comprise a position, an orientation and an identifier, where each entry represents one component and its positioning on the intermediate carrier. Position and orientation can be two- or three-dimensional, preferably relative to the intermediate carrier. The identifier can be unique for the component or for the type of component.

Alternatively, the virtual representation can be provided graphically.

The representation can be provided for example as a 2D or 3D coordinate system for each carrier, where the grip point position and orientation are indicated for each component. The grip point position can be near the centre of gravity of the component. Alternatively, coordinates for one or more other points on each component can be indicated, such as apexes, holes, corners, etc.

For example, the representations can have the form of a database including a number of relationships between the article number of each component and the position of each carrier, and optionally, also an orientation vector for the grip point.

The representations can be stored in a control system for the material handling system. Alternatively, the representations can be stored separately, e.g. on a storage unit associated with each carrier, which can be read using RFID, NFC, etc.

The components can be formed from a planar, disc-shaped blank, preferably a metal sheet.

In the method, said machining step can comprise cutting and/or bending of such a blank.

According to a second aspect, a method for manufacturing an agricultural implement according to claim 12 is provided, comprising providing a material set carrier with components for manufacturing the agricultural implement as described above; and assembling the components to form at least one part of the agricultural implement.

A transport device, for simultaneous transport and picking of components is provided, comprising a carrier device, which is dimensioned to receive at least one intermediate carrier and at least one material set carrier; a numerically controllable picking device, which is moveable together with the carrier device and configured, when the intermediate carrier and the material set carrier are located on the carrier device, to pick components from the intermediate carrier and move them to the material set carrier; and a numerically controllable driving arrangement, for driving the movement of the carrier device along at least one dimension.

"Simultaneous" means that transport and picking occur at the same time, i.e. that the picking of the components occurs at the same time as they are transported.

The transport device can further comprise a loading device, arranged to load and/or unload the intermediate carrier and the material set carrier.

The carrier device can have a first space for the intermediate carrier and at least one, preferably two, spaces for the material set carrier. It will be appreciated that more than two spaces for the material set carrier can be provided, as is deemed suitable with respect to the size of the transport device and the material set carriers.

According to a third aspect, a material handling system according to claim 13 is provided comprising a feed station, for providing intermediate carriers with components; a storage arrangement, comprising a plurality of storage areas for material set carriers; and a transport device as described above. The transport device is configured to move along the storage arrangement; collect the intermediate carrier; collect at least one material set carrier from a first storage area in the storage arrangement; while moving along the storage arrangement, transfer at least one of the components from the intermediate carrier to the material set carrier; and leave the material set carrier in a second storage area in the storage arrangement or in a second storage arrangement.

The feed station is arranged to carry out at least one machining step for forming at least one of said components.

### Brief description of the drawings

Fig 1 schematically shows a material handling system.
Figs 2a-2b schematically show a transport device.
Fig 3 schematically shows a flow in the material handling system.

### Detailed description

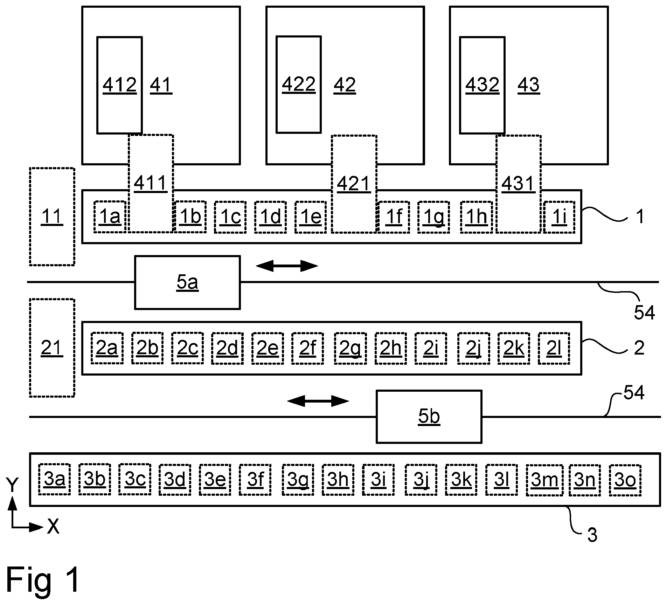

Fig 1 shows a material handling system viewed from above, comprising storage arrangements 1, 2, 3, each comprising a plurality of storage areas 1a-1i; 2a-2l; 3a-3o.

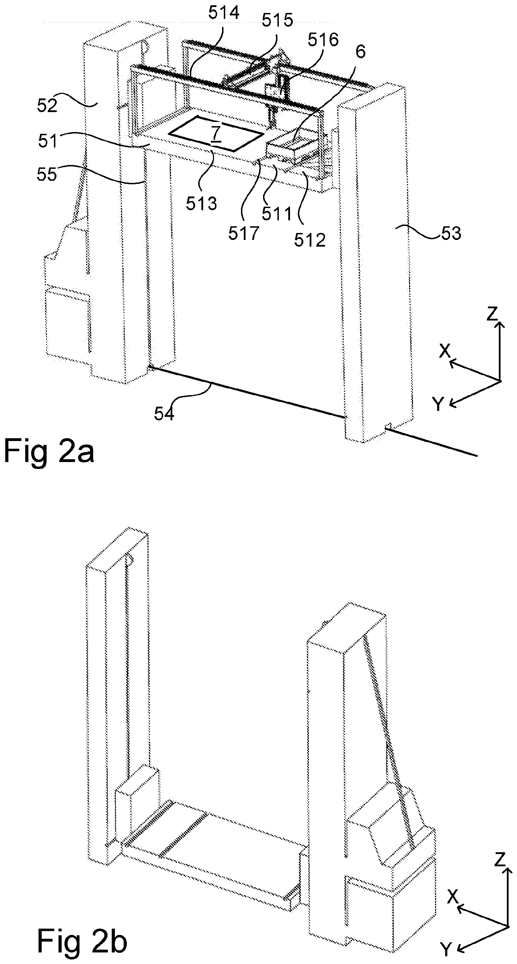

In the example shown, the storage arrangements 1, 2, 3 are shown with an extent only horizontally, in an X direction. However, it will be appreciated that the storage arrangements 1, 2, 3 can advantageously have an extent also in a Z direction (Figs 2a, 2b), perpendicular to the X-Y plane.

Fig 1 also shows three feed stations 41, 42, 43, which can comprise respective loading zones 411, 421, 431 and machining arrangements 412, 422, 432.

Moreover, Fig 1 shows transport devices 5, which are arranged between adjacent storage arrangements 1, 2; 2, 3.

Furthermore, supply and removal zones 11, 21 are shown, at which the transport devices 5a, 5b can collect incoming material and/or leave outgoing material carriers.

In the example shown, the first storage arrangement 1 can be used to store incoming material, i.e. material to be machined in the feed stations 41, 42, 43. The first storage arrangement has loading zones 411, 421, 431, via which loading zones material can be moved from the first transport device 5a to the respective feed station 41, 42, 43, and via which loading zones material can be moved from the respective feed station 41, 42, 43 to the first transport device.

Incoming material, which is often more bulky than machined material, can be brought in via the supply and removal zone 11 on a raw material carrier (not shown), wherein the raw material is handled by a local material handling system in the feed station 41, 42, 43, machined in the respective machining arrangement 412, 422, 423 and then arranged on an intermediate carrier.

The intermediate carrier can be, but does not have to be, identical to the raw material carrier.

The machining can comprise one or more of cutting (punching, laser-cutting, sawing), turning, milling, drilling, threading, assembling (welding, soldering, riveting), post-treatment of cut surfaces, bending and pressing.

Typically, the use of material is optimized by, based on which units are to be manufactured in the near future, taking out the maximum number of parts from the piece of raw material. This means that the components obtained from a piece of raw material can be used in one, two or more readymade products. Therefore, the components must be sorted into material sets, where one or more material sets contain components to be joined together to form one product.

The intermediate carrier, which consequently contains components to be distributed on a plurality of material set carriers, is thus fed from the loading zone 411, 421, 431. For example, the loading zone can extend through the first storage arrangement 1, so that the first transport device 5a can serve both incoming raw material and outgoing components, and so that the first transport device 5a can serve two opposite storage arrangements 1, 2.

The second storage arrangement 2 can be arranged to store material set carriers, which can be smaller in size than the intermediate carriers.

For example, the material set carriers can have a standard size, such as 800x1200 mm.

The second storage arrangement 2 is accessible from both directions, so that the first transport device 5a as well as the second transport device 5b can collect and leave material set carriers in the second storage arrangement 2.

The first transport device 5a works in a zone between the first storage arrangement 1 and the second storage arrangement 2.

The second loading and unloading zone 21 can be used for transferring intermediate carriers from the first transport device 5a to the second transport device 5b so that both transport devices can work in parallel.

The third storage arrangement 3 can be designed in the same way as the second storage arrangement 2. The second transport device 5b works in a zone between the second storage arrangement 2 and the third storage arrangement 3.

Figs 2a-2b show a transport device 5, which has a carrier 51 and a pair of supports 52, 53. The supports are movable along a horizontal direction X. The movement can be provided using a horizontal guide 54, which can have the form of one or more tracks extending in the X direction. Driving along the horizontal guide 54 can be provided by drive units (not shown) arranged in the supports 52, 53, or by a drive unit (not shown) arranged in the horizontal guide. Thus, the transport device 5 can be moveable in a numerically controllable way in the horizontal direction X.

It will be appreciated that the supports 52, 53 can be designed in other ways, for example, as a support with the carrier 51 as a torque-fixed tensioned part, such as a scissor lift, or suspended from an overhead travelling crane.

Furthermore, the carrier 51 can be moveable along a vertical direction Z. The movement can be provided using a vertical guide 55, which can have the form of a gear rack, a cable, a hydraulic actuator or an adjusting screw. Driving in the vertical direction Z can be provided using a drive unit (not shown) arranged in the supports or on the carrier 51.

The carrier 51 can have one or more material set carrier zones 511, 512 as well as an intermediate carrier zone 513. Each of the zones 511, 512, 513 can have a loading device 517 with the ability to load and unload a material set carrier or an intermediate carrier.

The loading device can comprise a telescopic fork-like arrangement, with which a material set carrier or an intermediate carrier situated on the transport device can move between the transport device and, for example, a storage area 1a-1i; 2a-2l; 3a-3o or a loading zone 411, 421, 431. As an alternative, interacting conveyor belts on the storage area and the transport device can be used, movements of which can be coordinated in order to hand over a carrier from one to the other.

The transport device 5 further comprises a picking device 514, 515, 516. The picking device can be designed as an arbitrary numerically controllable picking device. In the example shown, the picking device is designed as an overhead travelling crane with a pair of longitudinal (X direction) guides 514, a transverse (Y direction) guide 515 which runs along the longitudinal guides 514 and a vertically (Z) moving gripping portion 516.

The gripping portion 516 can be provided with a gripping means suitable for the type of material to be handled, such as an electromagnet, a suction apparatus, a gripping claw, etc.

As an alternative, the picking device can be designed as a robot arm or similar.

By moving the gripping portion 516 horizontally X, Y and vertically Z, and selectively operating the gripping portion 516, components can be picked from the intermediate carrier 7 and placed on either one of the material set carriers 6.

Since the picking device is arranged on the same carrier 51 as the intermediate carrier 7 and the material set carrier 6, the picking of components from the intermediate carrier and transferring them to the material set carrier 6 can be carried out while the carrier is moving horizontally in the X direction along the guide 54, and vertically in the Z direction along the guide 55.

Fig 2b shows the transport device in Fig 2a from the opposite direction, with the picking device removed and the carrier 51 in its lowest position.

It will be appreciated that the material handling device described herein requires a comprehensive control system, which can keep track of where all intermediate carriers are located and what they contain, and where all material set carriers are located and what they contain.

Furthermore, technology for identifying components is required. This can be provided in a number of different ways. For example, components can be identified with respect to their shape, size and position using 3D reading equipment.

It is also possible to track components based on their positioning on the respective carrier, wherein each carrier can be a coordinate system or, alternatively, can have a number of predetermined positions for components.

For example, it is possible to form a data volume, where the position and orientation of each component are indicated based on the geometry of the carrier, wherein the data volume tracks the carrier so that, for example, the transport devices 5a, 5b can identify the position and orientation of the components on the intermediate carrier using the data volume. In the same way, a data volume can be formed for each material set carrier. Such a data volume can track the material set carrier not only during its time in storage, but also to production, since this can enable automatic picking, e.g. for positioning in a welding rig. Alternatively, components can be identified and their positions determined using labels arranged on each component. Such labels can be based on RFID, NFC, barcodes, QR codes or similar.

It is also possible to identify articles based on type of material, properties of materials (weight, magnetic properties, electric properties, spectral response, etc.).

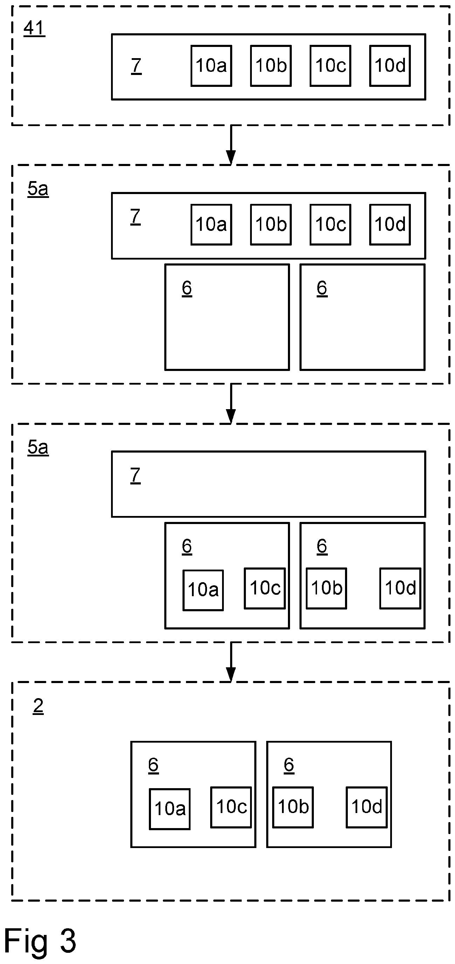

With reference to Fig 3, the function of the system will be described.

Raw material, for example in the form of sheets on a raw material carrier (not shown), is received via the first loading and unloading zone 11. The sheets can be delivered directly to this zone 11 from a lorry or using a truck.

The first transport device 5a is controlled to the first loading and unloading zone 11 to collect the raw material carrier. The raw material carrier can then be moved by the first transport device to the first storage arrangement 1 for intermediate storage in a storage area 1a-1i, or directly to one of the loading zones 411, 421, 431 for supplying to the feed station 41, 42, 43. During intermediate storage, the first transport device 5a collects the raw material carrier when it is required, and moves it to the loading zone 411, 421, 431.

When a feed station 41, 42, 43 has completed a machining operation so that an intermediate carrier 7 is ready to distribute its components 10a, 10b, 10c, 10d to material set carriers 6, this is fed out via the loading zone 411, 421, 431.

The first transport device 5a collects one or more suitable material set carriers 6 from the second storage arrangement 2. The collected material set carriers 6 can be empty or partly filled with components. The transport device then collects the intermediate carrier 7 at the loading zone 411, 421, 431.

While the first transport device 5a moves the material set carriers 6 toward the storage areas 2a-2l in the second storage arrangement 2 intended therefor, the picking device picks components 10a, 10b, 10c, 10d from the intermediate carrier 7 and places them in their respective material set carrier 6 according to a predetermined specification.

When one material set carrier 6 is full, or when the intermediate carrier 7 does not contain any more components to be distributed to that material set carrier 6, the first transport device 5a can move the material set carrier 6 to a storage area in the second storage arrangement 2, and then collect a new material set carrier and continue picking and transferring components to the new material set carrier.

When one intermediate carrier is picked empty, it can be returned at, for example, a loading and unloading zone 11, 21 or at a loading zone 411, 421, 431.

Furthermore, the intermediate carrier can be transferred over to the second transport device 5b, either via through-loading areas in the second storage arrangement 2, analogous to what is shown in the first storage arrangement 1, or via the second loading and unloading zone 21.

Consequently, the second transport device 5b can work in exactly the same way as the first one, i.e. it collects the intermediate carrier with components as well as the material set carrier, and while it is moving, it picks components from the intermediate carrier and places them on the material set carrier, wherein the second transport device 5b then serves the second and third storage arrangements 2, 3.

When a material set carrier is complete and is to be fed out, this can be provided by the first or the second transport device 5a, 5b collecting the material set carrier and moving it to, for example, a loading and unloading zone 11, 21.

It will be appreciated that a material handling system as described above, can be scaled up as required, for example, by adding larger and/or more feed stations, larger and/or more storage arrangements and/or larger and/or more transport devices.

The size of the intermediate carriers and the material set carriers can be selected based on what is deemed suitable with respect to the size of the components and the number of components.

## Claims

1. Method for distribution of components to material sets in a material handling system, comprising a feed station (41, 42, 43), for providing intermediate carriers with components; a storage arrangement (1, 2, 3), comprising a plurality of storage areas (1a-1i; 2a-2l; 3a-3o) for material set carriers; and a transport device for simultaneous transport and picking of components, the transport device comprising a carrier device, which is dimensioned to receive at least one intermediate carrier and at least one material set carrier and a numerically controllable picking device, which is moveable together with the carrier device,
wherein the transport device is configured to:
move along the storage arrangement;
collect the intermediate carrier (7);
collect at least one material set carrier (6) from a first storage area (1a-1i; 2a-2l; 3a-3o) in the storage arrangement (1, 2, 3); and
while moving along the storage arrangement (1, 2, 3), transfer at least one of the components from the intermediate carrier (7) to the material set carrier (6);
the method comprising:
carrying out, at the feed station (41, 42, 43), at least one machining step to provide at least two components;
arranging, at the feed station (41, 42, 43), said at least two components on a common intermediate carrier (7); and
transferring said components to the at least one material set carrier (6) located at a distance from the feed station (41, 42, 43), in such a way that each of said material set carriers (6) contains a plurality of components that are intended to be joined together to form part of a predetermined product;
wherein the transfer of the components to the material set carrier is carried out using the numerically controlled picking device, while the intermediate carrier and the material set carrier are being moved using the common transport device driven by a numerically controllable driving arrangement, between first and second storage areas in the storage arrangement or in a second storage arrangement (1, 2, 3) for storing a plurality of material set carriers (6).

2. Method according to Claim 1, further comprising:
collecting the material set carrier from the first storage area, and
when the transfer of components to the material set carrier is completed, leaving the material set carrier in the second storage area.

3. Method according to Claim 2, further comprising:
collecting a second material set carrier from a third storage area in the storage arrangement or in the second storage arrangement,
transferring at least one component from the intermediate carrier to the second material set carrier while the intermediate carrier and the material set carriers are being moved using the transport device, and
when the transfer of components to the second material set carrier is completed, leaving the second material set carrier in a fourth storage area in the storage arrangement or in the second storage arrangement.

4. Method according to any one of the preceding claims, wherein said components are arranged, at the feed station (41, 42, 43), on said intermediate carrier (7) using a robot.

5. Method according to any one of the preceding claims, wherein said component is positioned at a predetermined position on the material set carrier (6).

6. Method according to any one of the preceding claims, wherein said at least two components are intended to form part of different products.

7. Method according to any one of Claims 1-5, wherein said at least two components are intended to form part of the same product.

8. Method according to any one of the preceding claims, wherein said at least two components substantially differ with respect to the material, the shape, the dimension and/or the layout of the cut-out.

9. Method according to any one of the preceding claims, further comprising said transfer of components to the material set carrier also being carried out while the transport device is stationary, such as during loading or unloading of one of the material set carriers.

10. Method according to any one of the preceding claims, further comprising:
when one of the components is arranged on the intermediate carrier, forming a first virtual representation of the position of the component on the intermediate carrier;
when the component is transferred to the material set carrier, identifying the component using said first virtual representation so that the picking device can grip and pick up the component; and
when the components are arranged on the material set carrier, forming a second virtual representation of each position of the components on the material set carrier.

11. Method according to any one of the preceding claims, wherein said components are formed from a planar, disc-shaped blank, preferably a metal sheet.

12. Method for manufacturing an agricultural implement, comprising providing a material set carrier with components for manufacturing the agricultural implement according to the method of any one of the preceding claims; and
assembling the components to form at least one part of the agricultural implement.

13. Material handling system, comprising:
a feed station (41, 42, 43), arranged to carry out at least one machining step on components, for providing intermediate carriers with said components;
a storage arrangement (1, 2, 3), comprising a plurality of storage areas (1a-1i; 2a-2l; 3a-3o) for material set carriers; and
a transport device, comprising:
a carrier device, which is dimensioned to receive at least one intermediate carrier and at least one material set carrier;
a numerically controllable picking device, which is moveable together with the carrier device and configured, when the intermediate carrier and the material set carrier are located on the carrier device, to pick components from the intermediate carrier and move them to the material set carrier; and
a numerically controllable driving arrangement, for driving the carrier device along at least one dimension, between the first and second storage areas in the storage arrangement or in a second storage arrangement (1, 2, 3) for storing a plurality of material set carriers (6);
wherein the transport device is configured to:
move along the storage arrangement;
collect the intermediate carrier (7);
collect at least one material set carrier (6) from a first storage area (1a-1i; 2a-2l; 3a-3o) in the storage arrangement (1, 2, 3);
while moving along the storage arrangement (1, 2, 3), transfer at least one of the components from the intermediate carrier (7) to the material set carrier (6); and
leave the material set carrier (6) in a second storage area in the storage arrangement (1, 2, 3) or in a second storage arrangement.

14. The material handling system according to Claim 13, further comprising a loading device (517), arranged to load and/or unload the intermediate carrier (7) and the material set carrier (6).

15. The material handling systemaccording to either Claim 13 or 14, wherein the carrier device (51) has a first space (513) for the intermediate carrier and at least one, preferably two, spaces (511, 512) for the material set carrier.

## Patentansprüche

1. Verfahren zur Verteilung von Komponenten auf Materialsätze in einem Materialhandhabungssystem, das eine Zuführungsstation (41, 42, 43), zum Bereitstellen von Zwischenträgern mit Komponenten, eine Lagerungsanordnung (1, 2, 3), die eine Vielzahl von Lagerungsbereichen (1a-1i; 2a-2l; 3a-3o) für Materialsatzträger umfasst, und eine Beförderungsvorrichtung zur gleichzeitigen Beförderung und Kommissionierung von Komponenten umfasst, wobei die Beförderungsvorrichtung eine Trägervorrichtung, die dafür bemessen ist, mindestens einen Zwischenträger und mindestens einen Materialsatzträger aufzunehmen, und eine numerisch steuerbare Kommissionierungsvorrichtung, die zusammen mit der Trägervorrichtung beweglich ist, umfasst,
wobei die Beförderungsvorrichtung zu Folgendem konfiguriert ist:
sich entlang der Lagerungsanordnung zu bewegen,
den Zwischenträger (7) aufzunehmen,
mindestens einen Materialsatzträger (6) aus einem ersten Lagerungsbereich (1a-1i; 2a-2l; 3a-3o) in der Lagerungsanordnung (1, 2, 3) aufzunehmen und,
während sie sich entlang der Lagerungsanordnung (1, 2, 3) bewegt, mindestens eine der Komponenten von dem Zwischenträger (7) zu dem Materialsatzträger (6) zu überführen,
wobei das Verfahren Folgendes umfasst:
Ausführen, an der Zuführungsstation (41, 42, 43), mindestens eines maschinellen Bearbeitungsschrittes, um mindestens zwei Komponenten bereitzustellen,
Anordnen, an der Zuführungsstation (41, 42, 43), der mindestens zwei Komponenten auf einem gemeinsamen Zwischenträger (7) und
Überführen der Komponenten zu dem mindestens einen Materialsatzträger (6), der in einer Entfernung von der Zuführungsstation (41, 42, 43) angeordnet ist, auf eine solche Weise, dass jeder der Materialsatzträger (6) eine Vielzahl von Komponenten enthält, die dafür vorgesehen sind, miteinander verbunden zu werden, um einen Teil eines vorbestimmten Erzeugnisses zu bilden,
wobei die Überführung der Komponenten zu dem Materialsatzträger unter Verwendung der numerisch gesteuerten Kommissionierungsvorrichtung ausgeführt wird, während der Zwischenträger und der Materialsatzträger unter Verwendung der gemeinsamen Beförderungsvorrichtung, die durch eine numerisch steuerbare Antriebsanordnung angetrieben wird, zwischen einem ersten und einem zweiten Lagerungsbereich in der Lagerungsanordnung oder in einer zweiten Lagerungsanordnung (1, 2, 3) zum Lagern einer Vielzahl von Materialsatzträgern (6) bewegt werden.

2. Verfahren nach Anspruch 1, das ferner Folgendes umfasst:
Aufnehmen des Materialsatzträgers aus dem ersten Lagerungsbereich und,
wenn die Überführung von Komponenten zu dem Materialsatzträger abgeschlossen ist, Hinterlassen des Materialsatzträgers in dem zweiten Lagerungsbereich.

3. Verfahren nach Anspruch 2, das ferner Folgendes umfasst:
Aufnehmen eines zweiten Materialsatzträgers aus einem dritten Lagerungsbereich in der Lagerungsanordnung oder in der zweiten Lagerungsanordnung,
Überführen mindestens einer Komponente von dem Zwischenträger zu dem zweiten Materialsatzträger, während der Zwischenträger und der Materialsatzträger unter Verwendung der Beförderungsvorrichtung bewegt werden, und,
wenn die Überführung der Komponenten zu dem zweiten Materialsatzträger abgeschlossen ist, Hinterlassen des zweiten Materialsatzträgers in einem vierten Lagerungsbereich in der Lagerungsanordnung oder in der zweiten Lagerungsanordnung.

4. Verfahren nach einem der vorhergehenden Ansprüche, wobei die Komponenten, an der Zuführungsstation (41, 42, 43), unter Verwendung eines Roboters auf dem Zwischenträger (7) angeordnet werden.

5. Verfahren nach einem der vorhergehenden Ansprüche, wobei die Komponente an einer vorbestimmten Position auf dem Materialsatzträger (6) positioniert wird.

6. Verfahren nach einem der vorhergehenden Ansprüche, wobei die mindestens zwei Komponenten dafür vorgesehen sind, einen Teil von unterschiedlichen Erzeugnissen zu bilden.

7. Verfahren nach einem der Ansprüche 1 bis 5, wobei die mindestens zwei Komponenten dafür vorgesehen sind, einen Teil desselben Erzeugnisses zu bilden.

8. Verfahren nach einem der vorhergehenden Ansprüche, wobei sich die mindestens zwei Komponenten in Bezug auf das Material, die Form, die Abmessung und/oder die Auslegung des Ausschnitts wesentlich unterscheiden.

9. Verfahren nach einem der vorhergehenden Ansprüche, das ferner umfasst, dass die Überführung von Komponenten zu dem Materialsatzträger ebenfalls ausgeführt wird, während die Beförderungsvorrichtung feststehend ist, wie beispielsweise während des Beladens oder Entladens eines der Materialsatzträger.

10. Verfahren nach einem der vorhergehenden Ansprüche, das ferner Folgendes umfasst:
wenn eine der Komponenten auf dem Zwischenträger angeordnet ist, Gestalten einer ersten virtuellen Darstellung der Position der Komponente auf dem Zwischenträger,
wenn die Komponente zu dem Materialsatzträger überführt ist, Identifizieren der Komponente unter Verwendung der ersten virtuellen Darstellung, so dass die Kommissionierungseinrichtung die Komponente ergreifen und aufheben kann, und,
wenn die Komponenten auf dem Materialsatzträger angeordnet sind, Gestalten einer zweiten virtuellen Darstellung jeder Position der Komponenten auf dem Materialsatzträger.

11. Verfahren nach einem der vorhergehenden Ansprüche, wobei die Komponenten aus einem ebenen, scheibenförmigen Rohling, vorzugsweise einem Metallblech, geformt werden.

12. Verfahren zum Herstellen eines landwirtschaftlichen Geräts, umfassend das Bereitstellen eines Materialsatzträgers mit Komponenten zum Herstellen des landwirtschaftlichen Geräts nach dem Verfahren nach einem der vorhergehenden Ansprüche und
Zusammenbauen der Komponenten, um mindestens einen Teil des landwirtschaftlichen Geräts zu formen.

13. Materialhandhabungssystem, das Folgendes umfasst:
eine Zuführungsstation (41, 42, 43), die dafür angeordnet ist, mindestens einen maschinellen Bearbeitungsschritt an Komponenten auszuführen, zum Bereitstellen von Zwischenträgern mit den Komponenten,
eine Lagerungsanordnung (1, 2, 3), die eine Vielzahl von Lagerungsbereichen (1a-1i; 2a-2l; 3a-3o) für Materialsatzträger umfasst, und
eine Beförderungsvorrichtung, die Folgendes umfasst:
eine Trägervorrichtung, die dafür bemessen ist, mindestens einen Zwischenträger und mindestens einen Materialsatzträger aufzunehmen,
eine numerisch steuerbare Kommissionierungsvorrichtung, die zusammen mit der Trägervorrichtung beweglich und dafür konfiguriert ist, wenn sich der Zwischenträger und der Materialsatzträger auf der Trägervorrichtung befinden, Komponenten von dem Zwischenträger zu kommissionieren und sie zu dem Materialsatzträger zu bewegen, und
eine numerisch steuerbare Antriebsanordnung, zum Antreiben der Trägervorrichtung entlang mindestens einer Dimension, zwischen dem ersten und dem zweiten Lagerungsbereich in der Lagerungsanordnung oder in einer zweiten Lagerungsanordnung (1, 2, 3) zum Lagern einer Vielzahl von Materialsatzträgern (6),
wobei die Beförderungsvorrichtung zu Folgendem konfiguriert ist:
sich entlang der Lagerungsanordnung zu bewegen,
den Zwischenträger (7) aufzunehmen,
mindestens einen Materialsatzträger (6) aus einem ersten Lagerungsbereich (1a-1i; 2a-2l; 3a-3o) in der Lagerungsanordnung (1, 2, 3) aufzunehmen,
während sie sich entlang der Lagerungsanordnung (1, 2, 3) bewegt, mindestens eine der Komponenten von dem Zwischenträger (7) zu dem Materialsatzträger (6) zu überführen,
den Materialsatzträger (6) in einem zweiten Lagerungsbereich in der Lagerungsanordnung (1, 2, 3) oder in einer zweiten Lagerungsanordnung zu hinterlassen.

14. Materialhandhabungssystem nach Anspruch 13, das ferner eine Ladevorrichtung (517) umfasst, die dafür angeordnet ist, den Zwischenträger (7) und/oder den Materialsatzträger (6) zu beladen und/oder zu entladen.

15. Materialhandhabungssystem nach einem der Ansprüche 13 oder 14, wobei die Trägervorrichtung (51) einen ersten Raum (513) für den Zwischenträger und mindestens einen, vorzugsweise zwei, Räume (511, 512) für den Materialsatzträger aufweist.

## Revendications

1. Procédé de distribution de composants à des ensembles de matériaux dans un système de manutention de matériaux, comprenant une station d'alimentation (41, 42, 43) pour approvisionner des supports intermédiaires en composants ; un agencement de stockage (1, 2, 3) comprenant une pluralité de zones de stockage (1a-1i ; 2a-2l ; 3a-3o) pour des supports d'ensembles de matériaux ; et
un dispositif de transport pour le transport et la prise simultanés de composants, le dispositif de transport comprenant un dispositif de support, qui est dimensionné pour recevoir au moins un support intermédiaire et au moins un support d'ensembles de matériaux et un dispositif de prise à commande numérique, qui est mobile conjointement avec le dispositif de support,
dans lequel le dispositif de transport est configuré pour :
se déplacer le long de l'agencement de stockage ;
collecter le support intermédiaire (7) ;
collecter au moins un support d'ensembles de matériaux (6) à partir d'une première zone de stockage (1a-1i ; 2a-2l ; 3a-3o) dans l'agencement de stockage (1, 2, 3) ; et
tout en se déplaçant le long du agencement de stockage (1, 2, 3), transférer au moins un des composants du support intermédiaire (7) au support d'ensemble de matériaux (6) ;
le procédé comprenant :
la réalisation, au niveau de la station d'alimentation (41, 42, 43), d'au moins une étape d'usinage pour fournir au moins deux composants,
l'agencement au niveau de la station d'alimentation (41, 42, 43), desdits au moins deux composants sur un support intermédiaire commun (7) ; et
le transfert desdits composants vers le ou les supports d'ensemble de matériaux (6) situés à distance de la station d'alimentation (41, 42, 43), de telle manière que chacun desdits supports d'ensemble de matériaux (6) contienne une pluralité de composants qui sont destinés à être assemblés pour former une partie d'un produit prédéterminé ;
dans lequel
le transfert des composants vers le support d'ensemble de matériaux est effectué à l'aide du dispositif de prélèvement à commande numérique, tandis que le support intermédiaire et le support d'ensemble de matériaux sont déplacés à l'aide du dispositif de transport commun entraîné par un dispositif d'entraînement à commande numérique, entre des première et deuxième zones de stockage dans l'agencement de stockage ou dans un deuxième agencement de stockage (1, 2, 3) pour stocker une pluralité de supports d'ensemble de matériaux (6).

2. Procédé selon la revendication 1, comprenant en outre :
la collecte du support d'ensemble de matériaux de la première zone de stockage, et
lorsque le transfert des composants vers le support d'ensemble de matériaux est terminé, le fait de laisser le support d'ensemble de matériaux dans la deuxième zone de stockage.

3. Procédé selon la revendication 2, comprenant en outre :
la collecte d'un deuxième support d'ensemble de matériaux à partir d'une troisième zone de stockage dans l'agencement de stockage ou dans le deuxième agencement de stockage,
le transfert d'au moins un composant du support intermédiaire au deuxième support d'ensemble de matériaux pendant que le support intermédiaire et les supports d'ensemble de matériaux sont déplacés à l'aide du dispositif de transport, et
lorsque le transfert de composants au deuxième support d'ensemble de matériaux est terminé, le dépôt du deuxième support d'ensemble de matériaux dans une quatrième zone de stockage dans l'agencement de stockage ou dans le deuxième agencement de stockage.

4. Procédé selon une quelconque des revendications précédentes, dans lequel lesdits composants sont disposés, au niveau de la station d'alimentation (41, 42, 43), sur ledit support intermédiaire (7) à l'aide d'un robot.

5. Procédé selon une quelconque des revendications précédentes, dans lequel ledit composant est positionné à une position prédéterminée sur le support d'ensemble de matériaux (6).

6. Procédé selon une quelconque des revendications précédentes, dans lequel lesdits au moins deux composants sont destinés à faire partie de produits différents.

7. Procédé selon une quelconque des revendications 1 à 5, dans lequel lesdits au moins deux composants sont destinés à faire partie du même produit.

8. Procédé selon une quelconque des revendications précédentes, dans lequel lesdits au moins deux composants diffèrent sensiblement en ce qui concerne le matériau, la forme, la dimension et/ou la disposition de la découpe.

9. Procédé selon une quelconque des revendications précédentes, comprenant en outre ledit transfert de composants vers le support d'ensemble de matériaux étant également effectué pendant que le dispositif de transport est stationnaire, par exemple pendant le chargement ou le déchargement d'un des supports d'ensemble de matériaux.

10. Procédé selon une quelconque des revendications précédentes, comprenant en outre :
lorsque l'un des composants est disposé sur le support intermédiaire, la formation d'une première représentation virtuelle de la position du composant sur le support intermédiaire ;
lorsque le composant est transféré vers le support d'ensemble de matériaux, l'identification du composant à l'aide de ladite première représentation virtuelle de sorte que le dispositif de prélèvement puisse prélever et récupérer le composant ; et
lorsque les composants sont disposés sur le support d'ensemble de matériaux, former une deuxième représentation virtuelle de chaque position des composants sur le support d'ensemble de matériaux.

11. Procédé selon une quelconque des revendications précédentes, dans lequel lesdits composants sont formés à partir d'une ébauche plane en forme de disque, de préférence une tôle métallique.

12. Procédé de fabrication d'un outil agricole, comprenant la fourniture d'un support d'ensemble de matériaux avec des composants pour la fabrication de l'outil agricole l'outil selon le procédé d'une quelconque des revendications précédentes ; et
l'assemblage des composants pour former au moins une partie de l'outil agricole.

13. Système de manutention de matériaux, comprenant :
une station d'alimentation (41, 42, 43), agencée pour effectuer au moins une étape d'usinage sur des composants, pour fournir des supports intermédiaires avec lesdits composants ;
un agencement de stockage (1, 2, 3), comprenant une pluralité de zones de stockage (1a-1i ; 2a-2l ; 3a-3o) pour des supports d'ensemble de matériaux ; et
un dispositif de transport, comprenant :
un dispositif de support, qui est dimensionné pour recevoir au moins un support intermédiaire et au moins un support d'ensemble de matériaux ;
un dispositif de prélèvement à commande numérique, qui est mobile conjointement au dispositif de support et configuré, lorsque le support intermédiaire et le support d'ensemble de matériaux sont situés sur le dispositif de support, pour prélever des composants du support intermédiaire et les déplacer vers le support d'ensemble de matériaux ; et
un dispositif d'entraînement à commande numérique, pour entraîner le dispositif de transport le long d'au moins une dimension, entre les première et deuxième zones de stockage dans l'agencement de stockage ou dans un deuxième agencement de stockage (1, 2, 3) pour stocker une pluralité de supports d'ensemble de matériaux (6) ;
dans lequel le dispositif de transport est configuré pour :
se déplacer le long de l'agencement de stockage ;
récupérer le support intermédiaire (7) ;
récupérer au moins un support d'ensemble de matériaux (6) à partir d'une première zone de stockage (1a-1i ; 2a-2l ; 3a-3o) dans l'agencement de stockage (1, 2, 3) ;
tout en se déplaçant le long de l'agencement de stockage (1, 2, 3), transférer au moins un des composants du support intermédiaire (7) au support d'ensemble de matériaux (6) ; et
laisser le support d'ensemble de matériaux (6) dans une deuxième zone de stockage dans l'agencement de stockage (1, 2, 3) ou dans un deuxième agencement de stockage.

14. Système de manutention de matériaux selon la revendication 13, comprenant en outre un dispositif de chargement (517), conçu pour charger et/ou décharger le support intermédiaire (7) et le support d'ensemble de matériaux (6).

15. Système de manutention de matériaux selon la revendication 13 ou 14, dans lequel le dispositif de support (51) comporte un premier espace (513) pour le support intermédiaire et au moins un, de préférence deux, espaces (511, 512) pour le support d'ensemble de matériaux.
